# FASCICULE DE BREVET EUROPEEN

(11) **EP 1 587 197 B1**
(45) Date de publication et mention de la délivrance du brevet: **10.12.2008**
(21) Numéro de dépôt: 04292707.9
(22) Date de dépôt: 16.11.2004
(51) Int. Cl.: H02G 3/12

(54) **Boîte électrique à encastrer comportant un accessoire de jonction à une goulotte**
Einbaudose mit Verbindungszubehör für einen Kanal
Flush mounted box with junction accessory for a channel

(30) Priorité: 04.12.2003 FR 0314228
(43) Date de publication de la demande: 19.10.2005
(73) Titulaire: LEGRAND FRANCE, 87000 Limoges (FR); LEGRAND SNC, 87000 Limoges (FR)
(72) Inventeur: Buard, Yvon, 53600 Voutre (FR)
(74) Mandataire: Orsini, Fabienne

(56) Documents cités:
- EP-A- 0 440 556
- EP-A- 0 721 245

## Description

### Domaine technique auquel se rapporte l'invention

La présente invention concerne de manière générale les boîtes électriques à encastrer, destinées à recevoir des câbles et/ou des conducteurs électriques provenant d'une goulotte rapportée en saillie sur une paroi.

Elle concerne plus particulièrement une boîte électrique à encastrer dans une paroi, à côté d'une goulotte rapportée en saillie sur ladite paroi, dont le volume intérieur forme un logement adapté à recevoir un mécanisme d'au moins un appareillage électrique, et comportant latéralement un prolongement à encastrer également, dont le volume intérieur communique avec le volume intérieur dudit logement et est au moins en partie ouvert en façade pour établir la liaison avec l'intérieur de ladite goulotte.

De telles boîtes sont notamment des boîtes pour appareillages électriques, des boîtes de dérivation de câbles et/ou de conducteurs électriques et des boîtes formant tableaux d'abonnés.

### Arrière-plan technologique

On connaît déjà du document EP 0 440 556 appartenant aux demanderesses, une boîte électrique du type précité dans laquelle il est prévu un couvercle amovible apte à refermer le volume intérieur dudit prolongement.

Ce couvercle comporte une paroi de fermeture plane bordée latéralement par des bords tombés destinés à venir porter contre des épaulements que présente ledit prolongement.

La hauteur desdits bords tombés est telle que ladite paroi de fermeture du prolongement affleure le débouché de ce dernier lorsque ces bords tombés sont en appui contre les épaulements du prolongement.

En outre, à une extrémité, ledit couvercle comporte transversalement une nervure destinée à venir se prendre sous le couvercle de fermeture de la goulotte, et à l'autre extrémité, il comporte un bord droit coupé venant à effleurement d'un bord de la plaque enjoliveur de l'appareillage électrique rapporté dans ladite boîte électrique encastrée.

Enfin ce couvercle peut rester apparent ou être recouvert par le revêtement de finition de la paroi.

### Objet de l'invention

Par rapport à l'état de la technique précité, la présente invention propose une nouvelle disposition qui, en autorisant la mise en oeuvre d'une boîte électrique à encastrer à prolongement latéral dans le cas où les conducteurs électriques nécessaires à la desserte électrique du ou des appareillage(s) disposé(s) dans ladite boîte sont disposés au sein d'une goulotte, est esthétique et simple à mettre en oeuvre et qui permet d'établir une jonction étanche vis-à-vis de l'extérieur entre l'intérieur de la goulotte et l'intérieur de la boîte électrique encastrée.

Plus particulièrement, l'invention propose une boîte électrique telle que définie en introduction, caractérisée en ce qu'elle comporte un accessoire de jonction adapté à fermer ledit volume intérieur dudit prolongement, cet accessoire de jonction comportant des moyens d'arrimage à la goulotte et à ladite boîte électrique de telle manière que, d'une part, une partie dudit accessoire de jonction est destinée à recouvrir au moins un bord coupé du couvercle de fermeture de ladite goulotte, et, d'autre part, une autre partie dudit accessoire de jonction est destinée à venir à effleurement d'un bord de la plaque enjoliveur de chaque appareillage électrique reçu dans ladite boîte électrique.

D'autres caractéristiques non limitatives et avantageuses de la boîte électrique conforme à l'invention sont les suivantes :
- une partie de l'accessoire de jonction est destinée à s'engager sous ladite plaque enjoliveur ;
- lesdits moyens d'arrimage de l'accessoire de jonction à la boîte électrique comprennent des moyens d'emboîtement sous la plaque enjoliveur ;
- lesdits moyens d'arrimage de l'accessoire de jonction à la boîte électrique comprennent des moyens d'appui contre la boîte électrique ;
- lesdits moyens d'arrimage de l'accessoire de jonction à la goulotte comprennent des moyens d'encliquetage au socle de ladite goulotte ;
- ledit accessoire de jonction se présente sous la forme d'un capot comportant une paroi de fermeture bordée, d'une part, sur deux côtés longitudinaux, de deux parois longitudinales parallèles, et, d'autre part, sur un côté transversal, d'une paroi transversale d'extrémité, ledit accessoire de jonction étant ouvert à l'opposé de ladite paroi transversale d'extrémité et lesdites parois longitudinales ainsi que ladite paroi transversale s'étendant sensiblement perpendiculaires à ladite paroi de fermeture de sorte que ledit accessoire de jonction présente une section sensiblement en forme de U ;
- les deux parois longitudinales de l'accessoire de jonction portent sur leur face interne lesdits moyens d'arrimage à ladite goulotte ;
- les deux parois longitudinales de l'accessoire de jonction portent sur leur face interne des moyens d'encliquetage au socle de la goulotte ;
- lesdits moyens d'encliquetage comprennent deux nervures destinées à s'engager dans des rainures formées en creux sur la face externe des ailes latérales dudit socle ;
- la paroi transversale d'extrémité de l'accessoire de jonction porte lesdits moyens d'arrimage à la boîte électrique ;
- ladite paroi transversale d'extrémité porte sur sa face externe une nervure destinée à s'engager sous ladite plaque enjoliveur ;
- ladite paroi transversale d'extrémité porte sur sa face interne une nervure destinée à s'appuyer contre la boîte électrique ;
- ledit accessoire de jonction comporte sur sa face interne, à l'opposé de ladite paroi transversale d'extrémité, un décrochement délimitant ladite partie destinée à recouvrir au moins un bord coupé du couvercle de fermeture de ladite goulotte ; et
- l'accessoire de jonction est une pièce monobloc réalisée par moulage d'une matière plastique.

### Description détaillée d'un exemple de réalisation

La description qui va suivre en regard des dessins annexés d'un mode de réalisation, donnés à titre d'exemples non limitatifs, fera bien comprendre en quoi consiste l'invention et comment elle peut être réalisée.

Sur les dessins annexés :
- la figure 1 est une vue en perspective de dessus en éclaté d'une boîte électrique selon l'invention ;
- la figure 2 est une vue en perspective de trois quarts en éclaté de la boîte électrique de la figure 1 ;
- la figure 3 est une vue de côté de la boîte électrique de la figure 1 assemblée ;
- la figure 4 est une vue en coupe longitudinale de la figure 3 ;
- la figure 5 est une vue assemblée de la figure 2 ;
- la figure 6A est une vue en perspective de dessus de l'accessoire de jonction de la boîte électrique de la figure 1 ; et
- la figure 6B est une vue en perspective de dessous de l'accessoire de jonction de la boîte électrique de la figure 1.

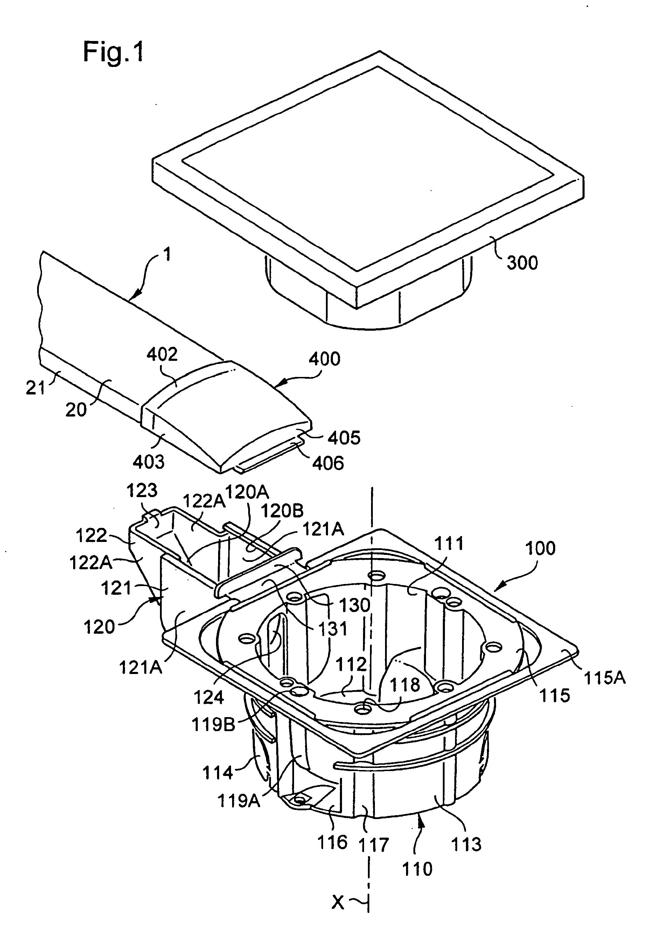

Sur les figures 1 à 5, on a représenté une boîte électrique 100 à encastrer dans un trou pratiqué dans une paroi, au bout d'une goulotte 1 rapportée en saillie sur ladite paroi, comme cela sera expliqué plus en détail ultérieurement.

La goulotte 1 est ici une moulure qui comporte de manière classique un socle 10 dont le fond plat, destiné à être appliqué contre la face avant de la paroi d'encastrement, est bordé longitudinalement par des ailes latérales qui s'élèvent perpendiculairement au fond. Le socle 10 comporte entre lesdites ailes latérales une ouverture longitudinale de sorte qu'il présente une section en forme de U. La goulotte 1 comporte en outre un couvercle 20 destiné à fermer l'ouverture longitudinale du socle 10, Ici le couvercle 20 est dit recouvrant du fait qu'il comporte des bords tombants 21 destinés à recouvrir les ailes latérales du socle 10.

Selon l'exemple représenté, la fixation du couvercle 20 sur le socle 10 de la goulotte 1 est réalisée par encliquetage d'une nervure (non visible sur les figures) qui court longitudinalement sur la face interne d'un bord tombant du couvercle 20 dans une rainure longitudinale (non visible sur les figures) prévue en creux sur l'aile latérale correspondante du socle 10.

Cette boîte électrique 100 comporte un corps de boîte 110 dont le volume intérieur forme un logement adapté à recevoir au moins un mécanisme d'appareillage électrique (non représenté) ici un interrupteur, et un pied 120, prolongeant latéralement le corps de boîte 110, dont le volume intérieur communiquant avec ledit logement est adapté à recevoir des conducteurs électriques C, provenant de la goulotte 1, nécessaire à la desserte dudit mécanisme d'appareillage.

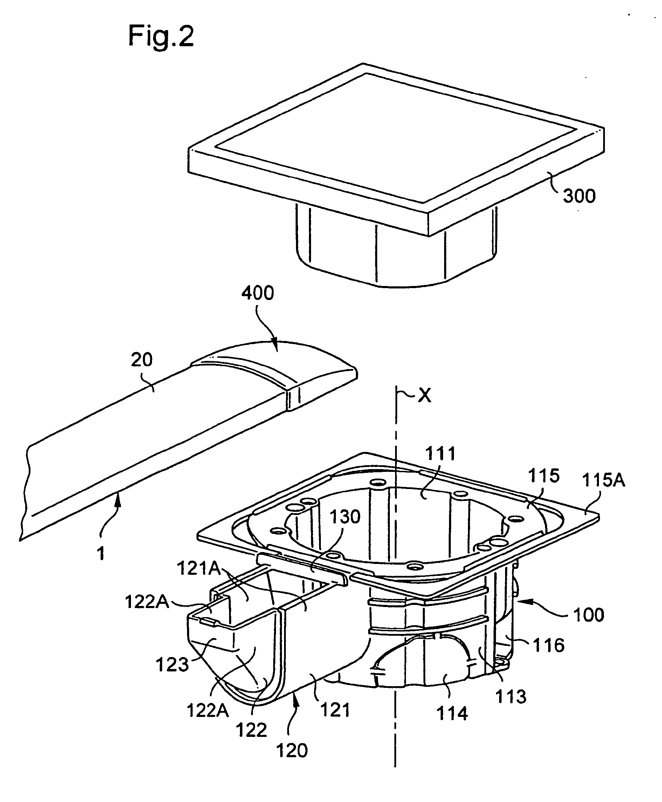

Comme le montrent plus particulièrement les figures 1 et 2, le corps de boîte 110 comporte un fond 112, une paroi latérale 113 sensiblement cylindrique de révolution autour d'un axe X qui définit intérieurement ledit logement, et une ouverture frontale 111 prévue à l'opposé du fond 112 pour l'introduction du mécanisme d'appareillage électrique (non représenté) dans ledit logement du corps de boîte 110.

La paroi latérale 113 comporte à proximité du fond 112 des entrées 114 de gaines d'amenée de câbles et/ou de conducteurs électriques fermées par des parois défonçables.

Avantageusement, l'ouverture frontale 111 du corps de boîte 110 est bordée par une collerette 115 qui est destinée à prendre appui sur la paroi d'encastrement afin d'éviter notamment que ladite boîte électrique 100 ne s'enfonce trop dans le trou d'encastrement. Cette collerette 115 comprend au moins un aménagement pour recevoir un moyen (non représenté) pour injecter de la colle entre ladite boîte électrique 100 et la paroi dans laquelle ladite boîte électrique 100 est encastrée.

Ici, ladite collerette 115 vient de formation avec le corps de boîte 110 de ladite boîte électrique 100 qui est réalisée par moulage d'une matière plastique transparente, mais selon une variante de réalisation non représentée on peut prévoir que ladite collerette soit une pièce rapportée sur ledit corps de boîte 110.

La collerette 115 est pourvue d'au moins un orifice traversant 118 (ici quatre orifices traversants) adapté à recevoir ledit moyen d'injection de colle.

En outre, la paroi latérale 113 du corps de boîte 110 de la boîte électrique 100 est pourvue de conduits 117 d'amenée de colle qui s'étendent selon l'axe X dudit corps de boîte 110 au droit des orifices traversants 118 de la collerette 115.

Chaque conduit 117 d'amenée de colle est une gorge prévue en creux sur la face externe de ladite paroi latérale 113.

Selon le mode de réalisation représenté sur les figures, chaque conduit 117 d'amenée de colle s'étend sur toute la hauteur (du bord de l'ouverture frontale 111 au bord du fond 112) du corps de boîte 110.

Le corps de boîte 110 de la boîte électrique 100 comprend en outre des moyens d'accrochage mécanique à la paroi dans laquelle il est encastré. Ces moyens d'accrochage sont particulièrement adaptés à fixer la boîte électrique 100 dans un trou d'une paroi creuse telle qu'une cloison alvéolaire.

A cet effet, la paroi latérale 113 comporte, sur sa face externe, au moins un renfoncement longitudinal 119A (ici deux renfoncements identiques diamétralement opposés) qui s'étend parallèlement à l'axe X depuis le bord de ladite ouverture frontale 111 jusqu'à proximité du fond 112 du corps de boîte 110 où il débouche latéralement dans un logement 116 destiné à accueillir une griffe (non représentée) constituant lesdits moyens d'accrochage.

Il est prévu également des moyens d'actionnement de ladite griffe aptes à faire prendre à ladite griffe une position en saillie de la face externe de ladite paroi latérale 113 pour l'ancrage du corps de boîte 110 à l'intérieur de la paroi d'encastrement.

Plus particulièrement chaque griffe est apte à prendre deux positions, à savoir, d'une part, une position rétractée à l'intérieur dudit logement 116 de sorte qu'elle se trouve placée à l'intérieur du gabarit du corps de boîte 110 pour l'engagement de celui-ci à l'intérieur du trou de la paroi d'encastrement considérée, et, d'autre part, une position en saillie de la face externe de la paroi latérale 113 du corps de boîte 110 pour l'ancrage du corps de boîte 110 à l'intérieur du trou.

Lesdits moyens d'actionnement comprennent préférentiellement une vis dont le corps fileté reçu dans le renfoncement 119A coopère par vissage avec la griffe.

La collerette 115 du corps de boîte 110 comporte un puits 119B de réception de la tête de chaque vis de manière que ladite tête est accessible du côté de l'ouverture frontale 111 du corps de boîte 110. Ce puits est percé dans son fond d'un trou de passage du corps fileté de ladite vis. Chaque vis, qui traverse la collerette 115, est fixe en translation et libre en rotation autour de son axe.

Lesdits moyens d'actionnement de la griffe comprennent également une rampe (non visible sur les figures) prévue sur ladite paroi latérale 113 du corps de boîte 110.

Par ailleurs, avantageusement, ladite collerette 115 est entourée d'un cadre carré 115A détachable. Ce cadre 115A est rattaché ponctuellement à ladite collerette 115 par des liaisons sécables. Il prend appui sur la face avant de la paroi d'encastrement lorsque ladite boîte électrique 100 est engagée dans le trou d'encastrement et il est destiné à recevoir en appui la plaque enjoliveur 300 de l'appareillage électrique dont le mécanisme est introduit dans le logement de ladite boîte électrique. De cette manière, le cadre 115A supprime le jeu éventuel existant en ladite plaque enjoliveur et ladite paroi d'encastrement, ce jeu étant dû à l'épaisseur non nulle de la collerette 115 en appui sur la face avant de ladite paroi d'encastrement.

Aux fins de fixation du support du mécanisme d'appareillage, le corps de boîte 110 comporte des conduits de réception de vis de fixation qui débouchent en façade dans ladite collerette 115.

Le pied 130 est défini par un fond 120A et deux parois longitudinales 121A, 122A, qui s'étendent sensiblement parallèlement l'une à l'autre, à une distance l'une de l'autre, qui, dans la forme de réalisation représentée, est inférieure ou égale à la largeur de ladite goulotte 1, et, perpendiculairement aux parois longitudinales 121A, 122A, une paroi transversale d'extrémité 123.

Par cette paroi transversale d'extrémité 123, la boîte électrique 100 est adaptée à porter à plat, si désiré, sur une quelconque surface d'appui qui ici appartient par exemple à la paroi d'encastrement ou à l'un ou l'autre des montants d'un chambranle.

Le pied 120 comporte, tout comme le corps de boîte 110, à l'opposé du fond 120A, une ouverture frontale 120B qui s'étend sur pratiquement toute la longueur dudit pied 120, de sorte que le volume intérieur dudit pied 120 est au moins en partie accessible de l'avant pour établir la liaison avec l'intérieur de ladite goulotte et permettre le passage des câbles et/ou conducteurs électriques C provenant du socle 10 de la goulotte 1.

Le volume intérieur du pied 120 communique avec le logement du corps de boîte 110 par une ouverture 124 située dans ladite paroi latérale 113. D'ailleurs lesdites parois longitudinales 121A, 122A du pied 120 s'étendent à partir de ladite paroi latérale 113 selon une direction sensiblement perpendiculaire à l'axe X du corps de boîte 110.

Avantageusement, selon l'invention, le pied comporte deux parties 121, 122, à savoir, une partie fixe 121 rattachée au corps de boîte 110 et une partie mobile 122 par rapport à ladite partie fixe 121.

La partie fixe est ici réalisée d'une seule pièce avec le corps de boîte 110 par moulage d'une matière plastique.

La partie mobile peut être rapportée par emboîtement sur ladite partie fixe. A cet effet, la partie mobile comporte des moyens d'emboîtement adaptés à coopérer avec des moyens d'emboîtement complémentaires échelonnés sur la longueur de la partie fixe.

Préférentiellement, ladite partie mobile 122 est une partie télescopique qui coulisse par rapport à ladite partie fixe 121.

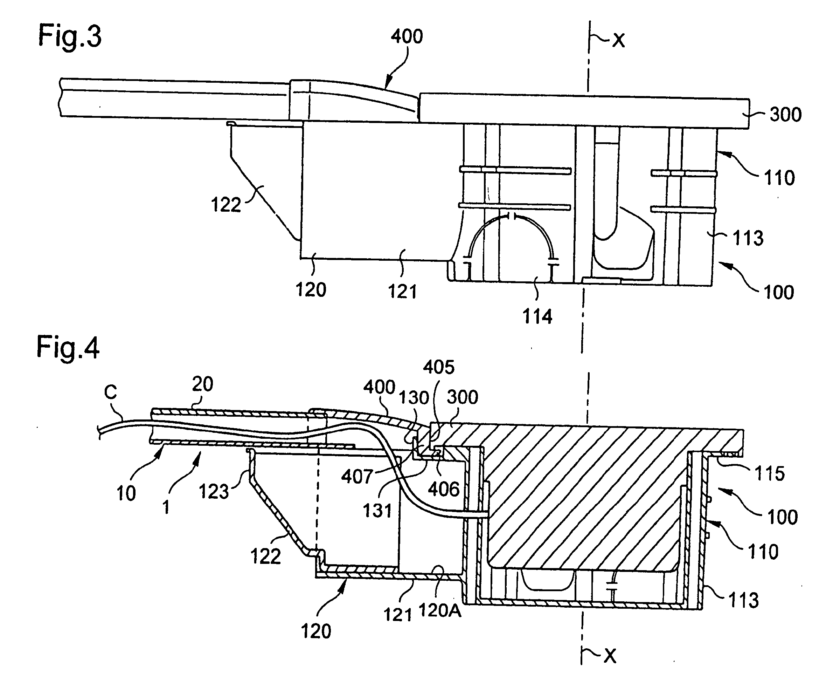

Ainsi, la longueur du pied 120 est adaptée de manière que le pied 120 s'étend sous le socle 10 de la goulotte 1 sur une distance suffisante pour établir, à l'arrière, une jonction étanche entre l'intérieur du socle 10 et le volume intérieur du corps de boîte 110 (voir figures 3 à 5).

Par ailleurs, comme le montrent les figures 1, 2 et 4, la boîte électrique 100 selon l'invention, comporte en saillie en façade dudit pied 120, à proximité de la jonction entre les volumes intérieurs du pied 120 et du corps de boîte 110, une nervure 130 qui s'étend transversalement à l'axe longitudinal dudit pied 120.

Cette nervure 130 s'élève perpendiculairement à une plateforme 131 qui ferme une partie de l'ouverture frontale 120B du pied 120.

Cette nervure 130 vient de formation avec le corps de boîte 110 et la partie fixe 121 du pied 120 par moulage d'une matière plastique.

Avantageusement, la boîte électrique 100 comporte un accessoire de jonction 400 adapté à fermer l'ouverture frontale 120B du pied 120 pour établir, à l'avant, une jonction étanche entre l'intérieur du socle 10 et le volume intérieur du corps de boîte 110 (voir figures 3 à 5).

A cet effet, comme le montrent les figures 3, 4 6A et 6B, cet accessoire de jonction 400 comporte des moyens d'arrimage 404, 406, 407 à la goulotte 1 et à ladite boîte électrique 100 de manière que, d'une part, une partie 402 de l'accessoire de jonction 400 est destinée à recouvrir au moins un bord coupé du couvercle 20 de fermeture de ladite goulotte, et d'autre part, une autre partie 405 de l'accessoire de jonction 400 est destinée à venir à effleurement d'un bord de la plaque enjoliveur 300 de l'appareillage électrique reçu dans ladite boîte électrique 100.

Préférentiellement, l'accessoire de jonction 400 comporte une partie 406 destinée à s'engager sous ladite plaque enjoliveur 300.

Préférentiellement également, lesdits moyens d'arrimage de l'accessoire de jonction 400 à la boîte électrique 100 comprennent des moyens d'emboîtement 406 sous la plaque enjoliveur 300 ainsi que des moyens d'appui 407 contre la boîte électrique 100. En outre, lesdits moyens d'arrimage de l'accessoire de jonction 400 à la goulotte comprennent des moyens d'encliquetage 404 au socle 10 de ladite goulotte 1.

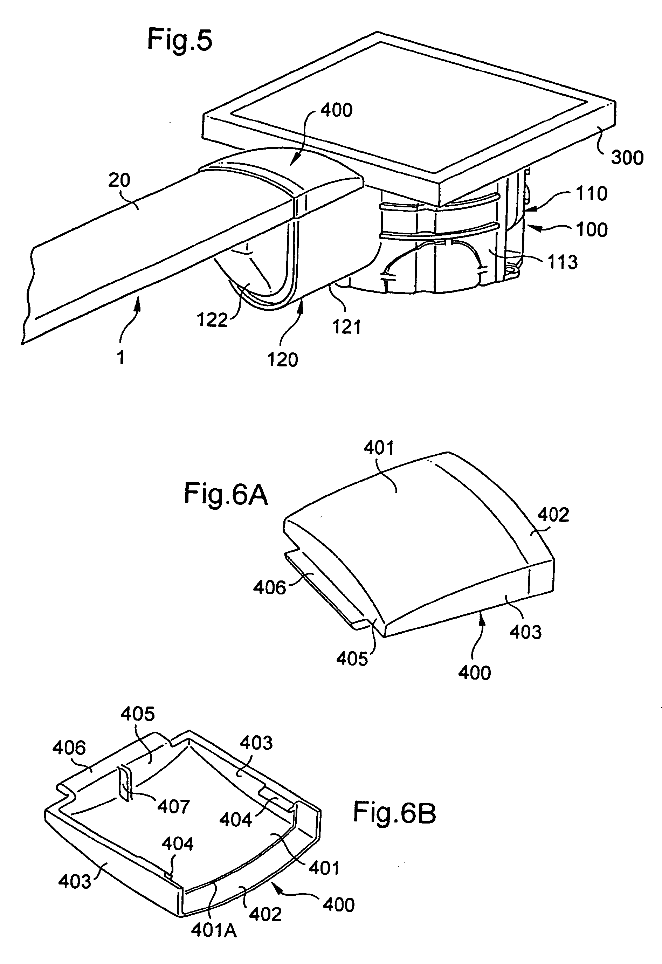

Plus particulièrement, comme le montrent les figures 6A et 6B, ledit accessoire de jonction 400 se présente sous la forme d'un capot comportant une paroi de fermeture 401 bordée, d'une part, sur deux côtés longitudinaux, de deux parois longitudinales 403 parallèles, et, d'autre part, sur un côté transversal, d'une paroi transversale d'extrémité 405.

L'accessoire de jonction est ouvert à l'opposé de ladite paroi transversale d'extrémité 405 pour recouvrir le bord coupé du couvercle 20 de fermeture.

Lesdites parois longitudinales 403 ainsi que ladite paroi transversale d'extrémité 405 s'étendent sensiblement perpendiculaires à ladite paroi de fermeture 401 de sorte que ledit accessoire de jonction présente une section sensiblement en forme de U tout comme le couvercle 20 de fermeture.

Les deux parois longitudinales 403 de l'accessoire de jonction 400 sont ici destinées à recouvrir une partie des bords tombants 21 du couvercle 20 de fermeture ainsi que des ailes latérales du socle 10. Elles portent sur leur face interne lesdits moyens d'arrimage à ladite goulotte, ici, des moyens d'encliquetage au socle 10 de la goulotte 1.

Ces moyens d'encliquetage comprennent deux nervures 404 destinées à s'engager dans lesdites rainures formées en creux sur la face externe des ailes latérales du socle 10, destinées à accueillir les nervures d'encliquetage du couvercle 20.

La paroi transversale d'extrémité 405 de l'accessoire de jonction 400 porte lesdits moyens d'arrimage 406, 407 à la boîte électrique.

Plus particulièrement, ladite paroi transversale d'extrémité 405 porte, d'une part, sur sa face externe une nervure 406 horizontale destinées à s'engager sous ladite plaque enjoliveur 300, et d'autre part, sur sa face interne une nervure 407 verticale destinée à s'appuyer contre la nervure 130 de la boîte électrique 100 (voir figure 4).

Lorsque ladite nervure 406 horizontale de la paroi transversale d'extrémité 405 de l'accessoire de jonction 400 est engagée sous la plaque enjoliveur 300, elle est coincée entre ladite plaque enjoliveur 300 et la plateforme 131 supportant la nervure 130 de la boîte électrique 100 et ladite nervure 407 est en appui contre ladite nervure 130 de la boîte électrique 100 de sorte que la face externe de la paroi transversale d'extrémité 405 de l'accessoire de jonction 400 est positionnée contre la tranche de la plaque enjoliveur 300 (voir figure 4).

L'accessoire de jonction 400 comporte par ailleurs sur sa face interne, à l'opposé de ladite paroi transversale d'extrémité 405, un décrochement 401A délimitant avec le bord d'extrémité du capot formant l'accessoire de jonction 400 ladite partie 402 destinée à recouvrir au moins un bord coupé du couvercle 20 de fermeture du socle 10 de ladite goulotte. Cette partie 402 de recouvrement est en creux de la face interne dudit accessoire de jonction 400 et le décrochement 401A est destiné à venir s'appuyer sur la tranche du bord coupé du couvercle 20 de fermeture de la goulotte 1.

Le décrochement 401A forme un repère de coupe du tronçon de couvercle 20.

Lorsque l'accessoire de jonction 400 est mis en place entre la goulotte 1 et la boîte électrique 100, il est coincé entre le couvercle 20 et la plaque enjoliveur 300 en étant encliqueté sur les ailes latérales du socle 10 de la goulotte 1.

Avantageusement, l'accessoire de jonction 400 est une pièce monobloc réalisée par moulage d'une matière plastique.

Pour encastrer la boîte électrique 100 en bout de goulotte on réalise un trou dans la paroi considérée à l'aide d'un outil de perçage. Ce trou comporte une partie circulaire destinée à accueillir le corps de boîte 110 cylindrique de la boîte électrique 100 ainsi qu'une partie linéaire qui s'étend sur certaine longueur depuis ladite partie circulaire.

Puis, on place ladite boîte électrique 100 dans le trou pratiqué dans la paroi. La collerette 115 du corps de boîte 110 s'appuie sur la face avant de la paroi ce qui permet d'éviter que la boîte électrique 100 ne s'enfonce trop dans ledit trou.

On rapporte le socle 10 de la goulotte 1 sur la paroi d'encastrement de sorte que l'axe longitudinal de ladite goulotte 1 s'étend selon l'axe longitudinal du pied 120, donc perpendiculairement à l'axe X du corps de boîte 110, et qu'une partie d'extrémité de ce socle 10 recouvre une partie (la partie mobile 122) du pied 120 encastré de la boîte électrique 100. Le pied 120 peut comporter avantageusement une marque ou un repère de positionnement du bord coupé du socle 10.

Le fond de socle 10 ferme alors une partie de l'ouverture frontale 120B dudit pied 120.

Puis on rapporte le couvercle 20 sur le socle 10 et l'on monte l'accessoire de jonction 400 sur la goulotte 1 de sorte que ses moyens d'encliquetage 404 s'engagent dans la ou les rainures du socle 10 et que sa partie 402 de recouvrement recouvre ledit bord coupé du couvercle 20 avec son décrochement 401A qui s'appuie contre la tranche de ce bord coupé.

Lors de son arrimage au socle 10 de la goulotte 1, l'accessoire de jonction 400 s'accoste également à la boîte électrique 100 par appui de sa nervure 407 verticale contre la nervure 130 de ladite boîte électrique 100.

Si nécessaire la position de la boîte électrique 100 est ajustée dans le trou d'encastrement de manière que l'arrimage de l'accessoire de jonction 400 à la boîte électrique soit correctement réalisé.

On fixe alors la boîte électrique 100 dans le trou d'encastrement.

La fixation de la boîte électrique 100 peut avantageusement être réalisée par collage.

Pour cela, lorsque la paroi d'encastrement est une paroi pleine l'opération de collage suffit à fixer ladite boîte électrique dans le trou d'encastrement.

On positionne alors la buse d'injection d'un pistolet ou d'un récipient de colle dans l'orifice traversant 118 correspondant de la collerette 115, et l'on injecte la colle contenue dans ledit récipient entre la paroi latérale 113 du corps de boîte 110 et la paroi. Lors de son injection, la colle s'écoule dans lesdits conduits 117 d'amenée de colle prévus sur la face externe de la paroi latérale 113 du corps de boîte 110 de la boîte électrique 100 pour se répartir uniformément dans l'espace libre existant entre la paroi et la boîte électrique 100. La collerette 115 qui s'appuie contre la face avant de la paroi forme avantageusement un obstacle qui évite à la colle injectée de remonter et de déborder sur la face avant de ladite paroi. Ainsi aucune opération de nettoyage de ladite paroi n'est nécessaire.

Avantageusement la matière transparente constituant ladite boîte électrique 100 permet à l'installateur de contrôler la quantité et la répartition de la colle qu'il injecte dans le trou d'encastrement.

Lorsque la paroi d'encastrement est une paroi creuse, pour fixer par collage ladite boîte électrique 100 dans une paroi creuse il est possible de réaliser, préalablement à l'injection de colle, un joint entre la paroi creuse et ladite boîte électrique 100 pour éviter que la colle injectée dans le trou d'encastrement ne s'écoule dans les alvéoles de cette dernière.

Dans une paroi creuse, l'installateur peut préfixer la boîte électrique 100 avant collage grâce auxdits moyens d'accrochage qu'elle comporte.

Plus particulièrement pour préfixer ladite boîte électrique 100 dans le trou de la paroi creuse l'installateur visse chacune des vis pour faire monter chaque griffe le long de la paroi latérale 113 du corps de boîte 110 de la boîte électrique 100.

Tout d'abord, la griffe, sous l'action de la vis, se déplace dans son logement, coopère alors avec la rampe correspondante et pivote pour sortir de son logement et prendre la position en saillie de la paroi latérale 113 du corps de boîte 110 de la boîte électrique 100.

Puis, chaque griffe, positionnée en saillie de la paroi latérale 113, monte le long de celle-ci pour venir prendre appui contre la face arrière de la paroi creuse concernée afin de retenir la boîte électrique 100 au sein du tour de ladite paroi creuse avant qu'elle ne soit collée par injection de colle au travers desdits orifices traversants 117 de la collerette 115.

Après un temps de séchage, on rapporte le mécanisme d'appareillage électrique dans le corps de boîte 110 de ladite boîte électrique 100, on câble ledit mécanisme avec les câbles préalablement tirés depuis le socle 10, puis on rapporte la plaque enjoliveur 300 dont un bord vient recouvrir ladite nervure 406 horizontale de l'accessoire de jonction 400. La face externe de la paroi transversale d'extrémité 405 de l'accessoire de jonction 400 est plaquée contre la tranche de ce bord de la plaque enjoliveur 300.

La jonction entre l'intérieur de la goulotte 1 et l'intérieur du corps de boîte 110 est alors parfaitement fermée de manière étanche, à l'avant, au moyen de l'accessoire de jonction 400, et, à l'arrière, au moyen du pied 120 de ladite boîte électrique.

La présente invention n'est nullement limitée au mode de réalisation décrit et représenté, mais l'homme du métier saura y apporter toute variante conforme à son esprit.

## Revendications

1. Boîte électrique (100) à encastrer dans une paroi, à côté d'une goulotte (1) rapportée en saillie sur ladite paroi, dont le volume intérieur forme un logement adapté à recevoir un mécanisme d'au moins un appareillage électrique, et comportant latéralement un prolongement (120) à encastrer également, dont le volume intérieur communique avec le volume intérieur dudit logement et est au moins en partie ouvert en façade pour établir la liaison avec l'intérieur de ladite goulotte, **caractérisée en ce qu'**elle comporte un accessoire de jonction (400) adapté à fermer ledit volume intérieur dudit prolongement (120), cet accessoire de jonction (400) comportant des moyens d'arrimage (404, 406, 407) à la goulotte (1) et à ladite boîte électrique (100) de telle manière que, d'une part, une partie (402) dudit accessoire de jonction (400) est destinée à recouvrir au moins un bord coupé du couvercle (20) de fermeture de ladite goulotte (1), et, d'autre part, une autre partie (405) dudit accessoire de jonction (400) est destinée à venir à effleurement d'un bord de la plaque enjoliveur (300) de chaque appareillage électrique reçu dans ladite boîte électrique.

2. Boîte électrique (100) selon la revendication 1, **caractérisée en ce qu'**une partie (406) dudit accessoire de jonction (400) est destinée à s'engager sous ladite plaque enjoliveur (300).

3. Boîte électrique (100) selon l'une des revendications 1 ou 2, **caractérisée en ce que** lesdits moyens d'arrimage à la boîte électrique comprennent des moyens d'emboîtement (406) sous la plaque enjoliveur.

4. Boîte électrique (100) selon l'une des revendications 1 à 3, **caractérisée en ce que** lesdits moyens d'arrimage à la boîte électrique comprennent des moyens d'appui (407) contre la boîte électrique.

5. Boîte électrique (100) selon l'une des revendications 1 à 4, **caractérisée en ce que** lesdits moyens d'arrimage à la goulotte comprennent des moyens d'encliquetage (404) au socle (10) de ladite goulotte (1).

6. Boîte électrique (100) selon l'une des revendications 1 à 5, **caractérisée en ce que** ledit accessoire de jonction (400) se présente sous la forme d'un capot comportant une paroi de fermeture (401) bordée, d'une part, sur deux côtés longitudinaux, de deux parois longitudinales (403) parallèles, et, d'autre part, sur un côté transversal, d'une paroi transversale d'extrémité (405), ledit accessoire de jonction (400) étant ouvert à l'opposé de ladite paroi transversale d'extrémité (405) et lesdites parois longitudinales (403) ainsi que ladite paroi transversale d'extrémité (405) s'étendant sensiblement perpendiculaires à ladite paroi de fermeture (401) de sorte que ledit accessoire de jonction (400) présente une section sensiblement en forme de U.

7. Boîte électrique (100) selon la revendication 6, **caractérisée en ce que** les deux parois longitudinales (403) de l'accessoire de jonction (400) portent sur leur face interne lesdits moyens d'arrimage à ladite goulotte.

8. Boîte électrique (100) selon la revendication 7, **caractérisée en ce que** les deux parois longitudinales (403) de l'accessoire de jonction portent sur leur face interne des moyens d'encliquetage au socle de la goulotte.

9. Boîte électrique (100) selon la revendication 8, **caractérisée en ce que** lesdits moyens d'encliquetage comprennent deux nervures (404) destinées à s'engager dans des rainures formées en creux sur la face externe des ailes latérales dudit socle.

10. Boîte électrique (100) selon l'une des revendications 6 à 9, **caractérisée en ce que** la paroi transversale d'extrémité (405) de l'accessoire de jonction porte lesdits moyens d'arrimage à la boîte électrique.

11. Boîte électrique (100) selon la revendication 10, **caractérisée en ce que** ladite paroi transversale d'extrémité (405) porte sur sa face externe une nervure (406) destinée à s'engager sous ladite plaque enjoliveur (300).

12. Boîte électrique (100) selon l'une des revendications 10 ou 11, **caractérisée en ce que** ladite paroi transversale d'extrémité (405) porte sur sa face interne une nervure (407) destinée à s'appuyer contre la boîte électrique.

13. Boîte électrique (100) selon l'une des revendications 6 à 12, **caractérisée en ce que** ledit accessoire de jonction (400) comporte sur sa face interne, à l'opposé de ladite paroi transversale d'extrémité, un décrochement (401A) délimitant ladite partie (402) destinée à recouvrir au moins un bord coupé du couvercle (20) de fermeture de ladite goulotte.

14. Boîte électrique (100) selon l'une quelconque des revendications précédentes, **caractérisée en ce que** l'accessoire de jonction (400) est une pièce monobloc réalisée par moulage d'une matière plastique.

## Claims

1. An electrical box (100) for flush-mounting in a wall beside a duct (1) that is surface-mounted on said wall, the inside volume of the box forming a housing suitable for receiving at least one electrical equipment mechanism, and including a lateral extension (120) also for flush-mounting, with the inside volume thereof communicating with the inside volume of said housing and also open, at least in part, in front to establish the connection with the inside of said duct, the box being **characterized in that** it includes a junction accessory (400) suitable for closing said inside volume of said extension (120), said junction accessory (400) including docking means (404, 406, 407) for docking to the duct (1) and to said electrical box (100) in such a manner, that firstly a portion (402) of said junction accessory (400) serves to cover at least one cut edge of the closure cover (20) of said duct (1), and secondly another portion (405) of said junction accessory (400) comes flush with an edge of the trim plate (300) of each electric switch received in said electrical box.

2. An electrical box (100) according to claim 1, **characterized in that** a portion (406) of said junction accessory (400) is designed to engage under said trim plate (300).

3. An electrical box (100) according to claim 1 or claim 2, **characterized in that** said means for docking to the electrical box comprise means (406) for engaging under the trim plate.

4. An electrical box (100) according to any one of claims 1 to 3, **characterized in that** said means for docking to the electrical box comprise means (407) for bearing against the electrical box.

5. An electrical box (100) according to any one of claims 1 to 4, **characterized in that** said means for docking to the duct comprise means (404) for snap-fastening to the base (10) of said duct (1).

6. An electrical box (100) according to any one of claims 1 to 5, **characterized in that** said junction accessory (400) is in the form of a cap having a closure wall (401) bordered, firstly on two long sides by two parallel longitudinal walls (403), and secondly on one transverse side by a transverse end wall (405), said junction accessory (400) being open opposite from said end transverse wall (405) and said longitudinal walls (403) and said end transverse wall (405) extending substantially perpendicularly to said closure wall (401) such that said junction accessory (400) presents a section that is substantially U-shaped.

7. An electrical box (100) according to claim 6, **characterized in that** the two longitudinal walls (403) of the junction accessory (400) carries said means for docking to said duct on their inside faces.

8. An electrical box (100) according to claim 7, **characterized in that** the two longitudinal walls (403) of the junction accessory carries means for snap-fastening to the base of the duct on their inside faces.

9. An electrical box (100) according to claim 8, **characterized in that** said snap-fastener means comprise two ribs (404) engaging in grooves set back in the outside faces of side flanges of said base.

10. An electrical box (100) according to any one of claims 6 to 9, **characterized in that** the end transverse wall (405) of the junction accessory carries said means for docking to the electrical box.

11. An electrical box (100) according to claim 10, **characterized in that** said end transverse wall (405) carries on its outside face a rib (406) for engaging under said first trim plate (300).

12. An electrical box (100) according to claim 10 or claim 11, **characterized in that** said end transverse wall (405) carries on its inside face a rib (407) for bearing against the electrical box.

13. An electrical box (100) according to any one of claims 6 to 12, **characterized in that** said junction accessory (400) includes on its inside face, opposite from said end transverse wall, a step (401A) defining said portion (402) that is to cover at least one cut edge of the closure cover (20) of said duct.

14. An electrical box (100) according to any preceding claim, **characterized in that** said junction accessory (400) is a single piece made by molding a plastics material.

## Patentansprüche

1. Schaltkasten (100) zum Einlassen in einer Wand neben einem Kabelkanal (1), der vorspringend auf die Wand aufgesetzt ist, dessen Innenvolumen eine Aufnahme bildet, die geeignet ist, um einen Mechanismus mindestens einer elektrischen Einrichtung aufzunehmen, und der seitlich eine ebenfalls einzulassende Verlängerung (120) aufweist, deren Innenvolumen mit dem Innenvolumen der Aufnahme in Verbindung steht und mindestens zum Teil an der Außenseite offen ist, um die Verbindung mit dem Inneren des Kabelkanals herzustellen, **dadurch gekennzeichnet, dass** er ein Verbindungszubehörteil (400) aufweist, das geeignet ist, um das Innenvolumen der Verlängerung (120) zu schließen, wobei dieses Verbindungszubehörteil (400) Mittel (404, 406, 407) zur Befestigung am Kabelkanal (1) und am Schaltkasten (100) aufweist, derart, dass einerseits ein Teil (402) des Verbindungszubehörteils (400) dazu bestimmt ist, einen beschnittenen Rand des Verschlussdeckels (20) des Kabelkanals (1) zu bedecken, und andererseits ein anderer Teil (405) des Verbindungszubehörteils (400) dazu bestimmt ist, bündig mit einem Rand der Abdeckplatte (300) jeder elektrischen Einrichtung abzuschließen, die im Schaltkasten aufgenommen wird.

2. Schaltkasten (100) nach Anspruch 1, **dadurch gekennzeichnet, dass** ein Teil (406) des Verbindungszubehörteils (400) dazu bestimmt ist, sich unter die Abdeckplatte (300) einzufügen.

3. Schaltkasten (100) nach einem der Ansprüche 1 oder 2, **dadurch gekennzeichnet, dass** die Mittel zur Befestigung am Schaltkasten Mittel (406) zum Einpassen unter die Abdeckplatte aufweisen.

4. Schaltkasten (100) nach einem der Ansprüche 1 bis 3, **dadurch gekennzeichnet, dass** die Mittel zur Befestigung am Schaltkasten Mittel (407) zur Anlage gegen den Schaltkasten aufweisen.

5. Schaltkasten (100) nach einem der Ansprüche 1 bis 4, **dadurch gekennzeichnet, dass** die Mittel zur Befestigung am Kabelkanal Mittel (404) zum Einrasten auf dem Sockel (10) des Kabelkanals (1) aufweisen.

6. Schaltkasten (100) nach einem der Ansprüche 1 bis 5, **dadurch gekennzeichnet, dass** das Verbindungszubehörteil (400) die Form eines Verschlussdeckels hat, der eine Verschlusswand (401) aufweist, die einerseits auf zwei Längsseiten von zwei parallelen Längswänden (403) und andererseits an einer Querseite von einer Endquerwand (405) umrandet wird, wobei das Verbindungszubehörteil (400) gegenüber der Endquerwand (405) offen ist und die Längswände (403) sowie die Endquerwand (405) sich im Wesentlichen lotrecht zur Verschlusswand (401) erstrecken, so dass das Verbindungszubehörteil (400) im Wesentlichen eine U-Form aufweist.

7. Schaltkasten (100) nach Anspruch 6, **dadurch gekennzeichnet, dass** die zwei Längswände (403) des Verbindungszubehörteils (400) auf ihrer Innenseite die Mittel zur Befestigung am Kabelkanal tragen.

8. Schaltkasten (100) nach Anspruch 7, **dadurch gekennzeichnet, dass** die zwei Längswände (403) des Verbindungszubehörteils auf ihrer Innenseite Mittel zum Einrasten auf dem Sockel des Kabelkanals tragen.

9. Schaltkasten (100) nach Anspruch 8, **dadurch gekennzeichnet, dass** die Einrastmittel zwei Rippen (404) aufweisen, die dazu bestimmt sind, sich in Rillen einzufügen, die vertieft auf der Außenseite der Seitenflügel des Sockels geformt sind.

10. Schaltkasten (100) nach einem der Ansprüche 6 bis 9, **dadurch gekennzeichnet, dass** die Endquerwand (405) des Verbindungszubehörteils die Mittel zur Befestigung am Schaltkasten trägt.

11. Schaltkasten (100) nach Anspruch 10, **dadurch gekennzeichnet, dass** die Endquerwand (405) auf ihrer Außenseite eine Rippe (406) trägt, die dazu bestimmt ist, sich unter die Abdeckplatte (300) einzufügen.

12. Schaltkasten (100) nach einem der Ansprüche 10 oder 11, **dadurch gekennzeichnet, dass** die Endquerwand (405) auf ihrer Innenseite eine Rippe (407) trägt, die dazu bestimmt ist, sich gegen den Schaltkasten anzulegen.

13. Schaltkasten (100) nach einem der Ansprüche 6 bis 12, **dadurch gekennzeichnet, dass** das Verbindungszubehörteil (400) auf seiner Innenseite gegenüber der Endquerwand einen Absatz (401A) aufweist, der den Teil (402) begrenzt, der dazu bestimmt ist, mindestens einen beschnittenen Rand des Verschlussdeckels (20) des Kabelkanals zu bedecken.

14. Schaltkasten (100) nach einem der vorhergehenden Ansprüche, **dadurch gekennzeichnet, dass** das Verbindungszubehörteil (400) aus einem Stück besteht, das durch Formen eines Kunststoffs hergestellt wird.
